# FASCICULE DE BREVET EUROPEEN

(11) **EP 4 244 073 B1**
(45) Date de publication et mention de la délivrance du brevet: **17.07.2024**
(21) Numéro de dépôt: 21805531.7
(22) Date de dépôt: 08.11.2021
(51) Int. Cl.: B60B 1/00, B60B 1/14, B60B 19/00, B60B 19/04, B60B 21/06, B60B 25/02, B60B 25/22, B60B 31/00, B60B 31/04, B60B 25/06

(54) **ROUE COMPOSÉE DE PLUSIEURS ÉLÉMENTS ASSEMBLABLES**
RAD BESEHEND AUS MEHREREN ZUSAMMENBAUBAREN TEILEN
WHEEL COMPOSED OF SEVERAL ELEMENTS WHICH CAN BE ASSEMBLED

(30) Priorité: 10.11.2020 FR 2011568
(43) Date de publication de la demande: 20.09.2023
(73) Titulaire: Costiou, Annabelle, 18390 Moulins sur Yevre (FR); Descamps, Gilles, 18160 Saint Baudel (FR); Forquet, Valérian, 69510 Thurins (FR); Koch, Olivier, 73140 Orelle (FR); Pansiot, Julien, 18110 Fussy (FR)
(72) Inventeur: Costiou, Annabelle, 18390 Moulins sur Yevre (FR); Descamps, Gilles, 18160 Saint Baudel (FR); Forquet, Valérian, 69510 Thurins (FR); Koch, Olivier, 73140 Orelle (FR); Pansiot, Julien, 18110 Fussy (FR)
(74) Mandataire: Lequien, Philippe
(86) Numéro de dépôt international: PCT/EP2021/080865
(87) Numéro de publication internationale: WO 2022/101113

(56) Documents cités:
- WO-A1-2019/175754
- KR-A- 20160 059 373
- US-A- 1 458 406
- US-A- 4 602 823

## Description

Le domaine de l'invention est celui de la conception et de la fabrication de roues pour véhicules légers tels que les véhicules terrestres non motorisés (poussettes et bicyclettes par exemple) ou les véhicules terrestres motorisés comme les motocyclettes, les drones, les trottinettes ou autres véhicules urbains sans permis par exemple.

Plus précisément, l'invention concerne une roue composée de plusieurs éléments assemblables.

Pour les véhicules motorisés ou non, les roues permettent de faire la liaison entre le sol et le véhicule.

Pour cela, les roues comprennent classiquement :
- une jante ;
- un moyeu par lequel la roue est reliée à un châssis du véhicule ;
- au moins trois rayons reliant la jante et le moyeu, et
- un pneu qui présente une bande de roulement formant une interface entre le véhicule et un sol sur lequel circule le véhicule.

Deux types de roues sont largement répandues à ce jour.

Un premier type de roues concerne les roues comprenant une chambre à air. Lorsque le pneu est gonflé, c'est la chambre à air qui contient l'air sous pression et met en pression le pneu.

Un deuxième type de roues concerne les roues sans chambre à air, également connu sous la dénomination anglo-saxonne « tubeless ».

De plus, la personnalisation des véhicules étant de plus en plus présente, il est fréquent que les constructeurs de véhicules légers proposent un catalogue fourni de modèles de roues. Ainsi, les acquéreurs de véhicules peuvent personnaliser les roues de leur véhicule lors de l'achat, mais ne pourront ultérieurement changer les roues qu'en dépensant une somme importante pour l'achat de nouvelles roues. En outre, la personnalisation se limitera alors aux modèles du catalogue sans possibilité, ou quasiment, de modifier la structure des roues achetées au cours de leur utilisation.

Parallèlement, pour la maintenance des pneus, notamment pour leur changement, les roues doivent pouvoir être montées et démontées rapidement.

Par ailleurs, les roues, qui peuvent en outre être soumises à des chocs plus ou moins réguliers durant l'utilisation du véhicule, doivent pouvoir être réparées, particulièrement en ce qui concerne les jantes ou les rayons, cela afin de limiter l'impact écologique.

Pour cela, un procédé largement répandu de réparation d'une jante et/ou de rayons comprend les étapes suivantes :
- retrait de la roue abîmée du véhicule ;
- retrait du pneu et éventuellement de la chambre à air ;
- réparation de chaque partie abîmée (par exemple par ajout de matière telle qu'un matériau métallique, un polymère ou un matériau composite) ;
- tests pour valider la réparation ;
- mise en place d'un pneu et éventuellement d'une chambre à air ;
- mise sous pression du pneu, et
- remontage de la roue réparée sur le véhicule.

Si un tel procédé se révèle efficace, il n'en demeure pas moins contraignant.

En premier lieu, l'étape de réparation de chaque partie abîmée demande un temps de préparation, de mise en oeuvre et de finition qui sont généralement très importants et engendrent l'immobilisation de la roue, voire du véhicule dans le pire des cas.

En deuxième lieu, une telle réparation peut être très onéreuse pour le propriétaire du véhicule, notamment lorsque la jante ou les rayons présentent un dessin particulier ou sont réalisés dans un matériau autre que les matériaux classiquement utilisés.

En troisième lieu, lorsque la roue comprend une multitude de rayons entrecroisés (ce qui est typiquement le cas de certaines roues des motocyclettes) le démontage et le remontage de la roue peut s'avérer long et fastidieux pour un opérateur.

Dès lors, lorsque l'un des rayons seulement est abimé, il est fréquent que la roue ne soit pas réparée ou que la roue soit intégralement changée au regard du coût engendré par la réparation.

Par ailleurs, lorsque les roues ne sont pas montées sur les véhicules, elles doivent être stockées et/ou transportées. Ainsi, une roue classique représente un volume d'encombrement important sans pour autant remplir l'intégralité de ce volume d'encombrement.

En effet, un espace vide existe entre les rayons, cet espace ne pouvant pas permettre la réception d'une autre roue par exemple.

Ainsi, lors du transport des roues, un espace vide reste disponible, cet espace ne pouvant généralement pas être comblé.

Le transport des roues pourrait donc se révéler moins coûteux (possibilité de transporter plus de roues ou d'autres objets pour un même volume de chargement) et plus écologique (nécessité de moyens de transports moins volumineux et moins énergivores). Le document US 4 602 823 A dévoile une roue montrant les caractéristiques selon le préambule de la revendication 1.

L'invention a notamment pour objectif de palier les inconvénients de l'art antérieur.

Plus précisément, l'invention a pour objectif de proposer une roue comprenant une plusieurs pièces assemblables de manière simple et rapide pour un opérateur.

L'invention a également pour objectif de fournir une telle roue qui permette une réparation rapide et peu coûteuse de l'une seulement de ses parties.

L'invention a en outre pour objectif de fournir une telle roue qui soit adaptative et modifiable en fonction du souhait de son propriétaire.

Ces objectifs, ainsi que d'autres qui apparaîtront par la suite, sont atteints grâce à l'invention qui a pour objet un roue comprenant une jante, un moyeu, au moins trois rayons reliant la jante et le moyeu, et un pneu, la jante présentant une gorge de réception du pneu, le pneu définissant avec la gorge de réception un volume de gonflage, la jante étant constituée par au moins deux tronçons en arc de cercle destinés à être solidarisés pour former ensemble la jante, la roue comprenant également un élément d'étanchéité monté dans le volume de gonflage pour permettre sa mise sous pression, caractérisé en ce que la jante et les rayons présentent des premiers moyens d'emboîtement radiaux, en ce que le moyeu et les rayons présentent des deuxièmes moyens d'emboîtement radiaux, le maintien en position emboîtée de la jante avec les rayons et du moyeu avec les rayons étant assuré par la mise sous pression du volume de gonflage.

L'assemblage d'une telle roue est simplifié pour un opérateur.

Cela est dû à la combinaison de l'emboitement radial des rayons avec le moyeu et avec la jante d'une part, et le maintien par la mise sous pression du volume de gonflage.

En effet, aucun outil n'est nécessaire à l'assemblage de la roue, si ce n'est qu'une pompe pour la mise sous pression du volume de gonflage.

Par ailleurs, les rayons peuvent être échangés pour modifier l'aspect général de la roue.

En effet, les rayons, qui sont indépendants, peuvent être changés par d'autres rayons afin de donner au véhicule une nouvelle esthétique.

Enfin, une telle roue permet de préserver l'environnement en ce que seule une partie de la roue peut être remplacée ou réparée indépendamment des autres parties.

Selon un mode de réalisation avantageux, l'élément d'étanchéité se présente sous la forme d'une chambre à air.

L'utilisation d'une chambre à air, classiquement connue, permet l'utilisation d'un pneu simple, ce qui réduit le coût d'une telle jante.

Selon un autre mode de réalisation avantageux, l'élément d'étanchéité se présente sous la forme d'un anneau élastique, tendant à maintenir les tronçons de la jante assemblés avant mise sous pression du volume de gonflage.

Grâce à cet anneau élastique, la roue peut être préassemblée et maintenue facilement dans cet état avant la mise en place du pneu.

Dès lors, les roues peuvent être montées en deux temps dont un premier pré-assemblage avant mise en place du pneu, puis un assemblage final durant lequel le pneu est mis en place et le volume de gonflage sous pression.

Cela permet alors de ne gonfler la roue que lorsque cela est nécessaire et à la pression souhaitée.

De préférence, les premiers moyens d'emboitement radiaux comprennent :
- des organes mâles portés par l'un de la jante et des rayons, et
- des organes femelles portés par l'autre des rayons et de la jante.

La coopération mâle/femelle assure une bonne tenue mécanique à liaison entre les rayons et la jante.

En outre, pour accroître la tenue mécanique et favoriser un montage selon une procédure déterminée, certains des rayons peuvent porter des organes mâles quand les autres rayons portent des organes femelles.

Avantageusement, chaque organe femelle se présente sous la forme d'une pièce rapportée et solidarisée à la jante.

Cela permet de fabriquer chaque pièce de la roue indépendamment des autres et de pouvoir modifier son aspect à l'envie et cela facilement. En effet, chaque partie de la roue peut être réalisée dans un matériau ou d'une teinte différente des autres.

En d'autres termes, la roue peut en elle-même être personnalisée et configurée à partir d'un catalogue répertoriant les différentes pièces et leurs déclinaisons.

Préférentiellement, les deuxièmes moyens d'emboitement radiaux comprennent :
- des éléments mâles portés par l'un du moyeu et des rayons, et
- des éléments femelles portés par l'autre des rayons et du moyeu.

La coopération mâle/femelle assure une bonne tenue mécanique à liaison entre les rayons et le moyeu.

En outre, pour accroître la tenue mécanique et favoriser un montage selon une procédure déterminée, certains des rayons peuvent porter des éléments mâles quand les autres rayons portent des éléments femelles.

Avantageusement, chaque tronçon de la jante présente une extrémité mâle et une extrémité femelle, l'extrémité mâle d'un tronçon coopérant avec l'extrémité femelle d'un tronçon abouté.

Cela permet de garantir un bon montage de la jante, notamment en s'assurant qu'une extrémité mâle d'un tronçon coopère bien avec l'extrémité femelle d'un autre tronçon.

De plus, la coopération mâle/femelle favorise la tenue mécanique de la jante.

Dans ce cas, la jante présente préférentiellement deux flancs de part et d'autre de la gorge de réception, et en ce que chaque tronçon présente :
- au moins une forme concave à l'une de son extrémité mâle et de son extrémité femelle,
- au moins une forme convexe à l'autre de son extrémité femelle et de son extrémité mâle,
la forme concave et la forme convexe coopérant l'une avec l'autre lorsque la jante est assemblée.

La coopération des formes concaves et convexes permet, outre la sécurisation du montage par effet de détrompeur, d'augmenter la tenue mécanique de la jante.

En effet, les formes concaves reprennent pour partie les efforts mécaniques subis par la roue, tout en conservant une forme circulaire à la roue, ce qui évite à la fois le voilage de la roue (déformation latérale à une direction de déplacement du véhicule dans un plan parallèle au plan sur lequel est le véhicule), et son saut (déformation orthogonale à la direction de déplacement dans un plan parallèle à la direction de déplacement du véhicule).

Selon un autre mode de réalisation avantageux, l'extrémité mâle de chaque tronçon de la jante présente au moins deux ergots, et l'extrémité femelle de chaque tronçon présente au moins deux logements de réception dans lesquels sont reçus les ergots.

Les ergots permettent d'assurer une bonne circularité à la jante lors de son montage puisque chacun des tronçons devient indexé par rapport aux autres tronçons.

De préférence, la jante comprend trois tronçons de liaison avec les rayons et trois tronçons intermédiaires, les tronçons intermédiaires étant chacun situés entre deux tronçons de liaison.

La répartition des efforts est ainsi uniformément répartie et la tenue de la jante accrue.

En effet, les tronçons intermédiaires sont correctement maintenus entre deux tronçons de liaison.

L'invention concerne également un procédé de montage d'une roue telle que précédemment décrite, caractérisé en ce qu'il comprend les étapes de :
- couplage par emboîtement des rayons et du moyeu ;
- couplage par emboîtement des rayons et de la jante ;
   puis,
- mise de l'élément d'étanchéité et du pneu dans la gorge de réception ;
- mise sous pression du volume de gonflage

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective de dessus d'un véhicule comprenant au moins une roue selon l'invention ;
- la figure 2 est une vue éclatée en perspective cavalière d'une roue selon l'invention, le pneu n'étant pas représenté ;
- la figure 3 est une vue de détail en section transversale d'une roue selon l'invention ;

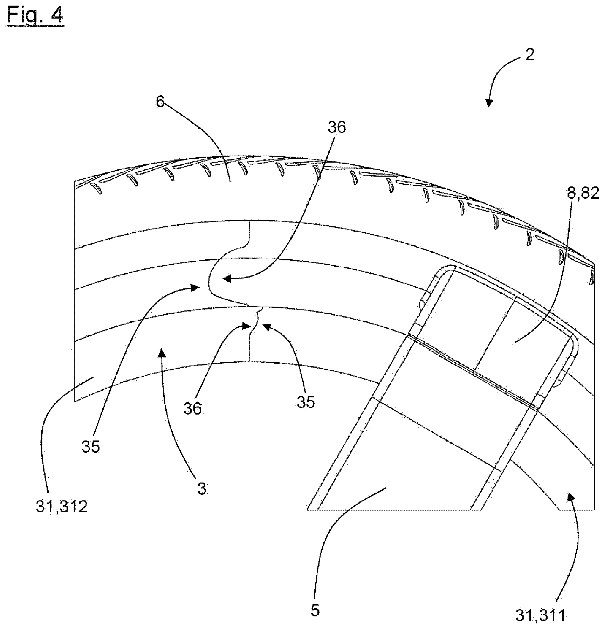

- la figure 4 est une vue en détail de face de la roue selon l'invention.

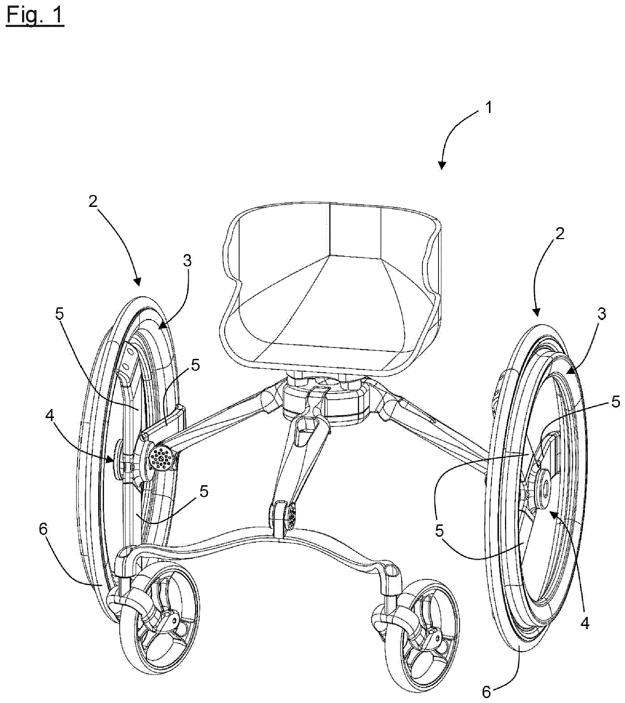

La figure 1 illustre un véhicule 1 comprenant une roue 2 selon l'invention.

Le véhicule 1 est en l'espèce un fauteuil roulant.

La roue 2 est plus particulièrement adaptée pour une utilisation sur un fauteuil roulant. Toutefois la roue 2 peut également être adaptée pour un autre type de véhicule, par exemple une bicyclette, une motocyclette, une poussette ou encore une trottinette.

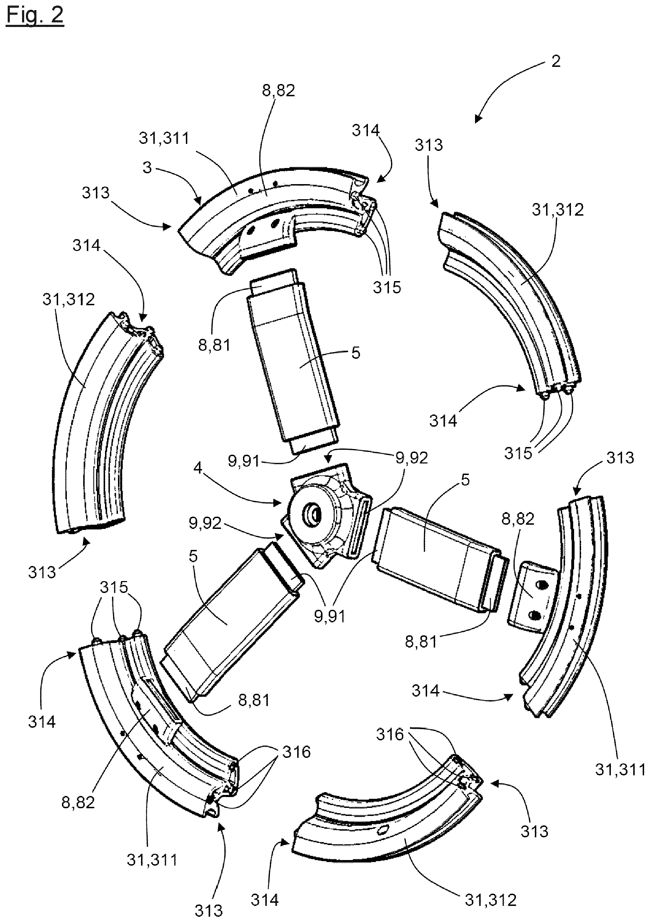

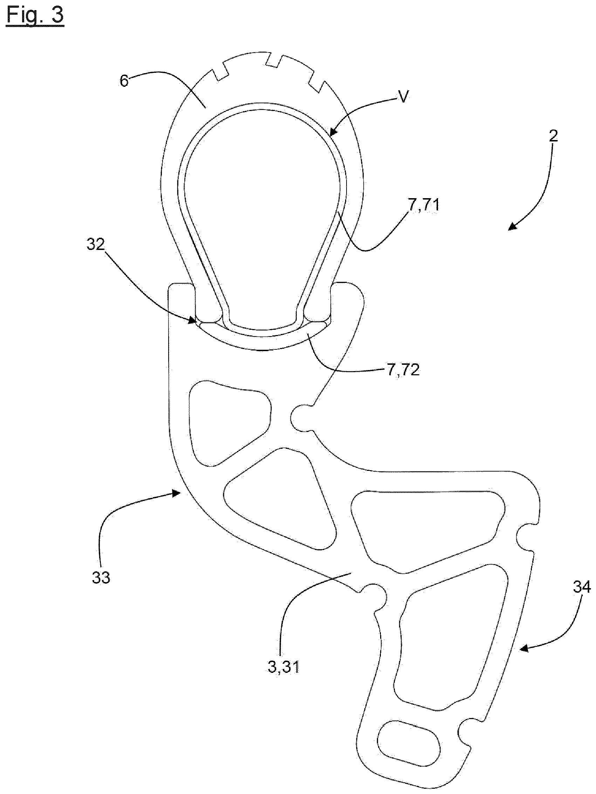

En référence aux figures 2 et 3, la roue 2 selon l'invention comprend :
- une jante 3 ;
- un moyeu 4 ;
- au moins trois rayons 5 reliant la jante 3 et le moyeu 4, et
- un pneu 6.

Tel qu'illustré sur la figure 2, la jante 3 comprend au moins deux tronçons 31 aboutés.

Plus particulièrement, la jante comprend six tronçons 31 dont trois tronçons de liaison 311 avec les rayons 5 comme expliqué ci-après, et trois tronçons intermédiaires 312.

Chaque tronçon intermédiaire 312 est intercalé entre deux tronçons de liaison 311.

En d'autres termes, chaque tronçon intermédiaire 312 est situé entre deux tronçons de liaison 311.

Chaque tronçon 31 présente une extrémité femelle 313 et une extrémité mâle 314.

Lorsque la jante 3 est assemblée, l'extrémité femelle 313 d'un tronçon 31 coopère avec l'extrémité mâle 314 d'un tronçon 31 auquel il est abouté.

En référence à la figure 2, et pour assurer la coopération entre les tronçons 31, et donc l'assemblage de la jante 3, l'extrémité mâle 314 de chaque tronçon 31 présente au moins deux ergots 315, et l'extrémité femelle 313 de chaque tronçon 31 présente au moins deux logements 316 de réception dans lesquels sont reçus les ergots 315.

Lorsque deux tronçons 31 sont aboutés, les ergots 315 de l'un des tronçons 31 viennent se loger dans les logements 316 de l'autre des tronçons 31, ce qui assure le maintien des tronçons 31 les uns par rapport aux autres.

En outre, les ergots 315 et les logements 316 forment des détrompeurs qui guident l'opérateur lors de l'assemblage de la jante 3.

En référence à la figure 3, la jante 3 présente une gorge 32 de réception du pneu 6.

Le pneu 6 définit ainsi, avec la gorge 32 de réception, un volume de gonflage V.

Comme expliqué ci-après, lorsque le volume de gonflage V est mis sous pression, la roue 2 peut être montée sur un véhicule pour être utilisée.

Pour assurer le maintien sous pression du volume de gonflage V, la roue 2 comprend également un élément d'étanchéité 7.

Cet élément d'étanchéité 7 est monté dans le volume de gonflage V et empêche toute fuite de pression lors de la mise sous pression du volume de gonflage V.

Selon un premier mode de réalisation, l'élément d'étanchéité 7 se présente sous la forme d'une chambre à air 71.

Lors de son gonflage, la chambre à air 71 remplit le volume de gonflage V pour le mettre sous pression.

Selon un deuxième mode de réalisation, l'élément d'étanchéité 7 se présente sous la forme d'un anneau élastique 72.

L'anneau élastique 72 est logé dans le fond de la gorge 32 et tend à maintenir les tronçons 31 de la jante 3 assemblés avant mise sous pression du volume de gonflage V.

L'anneau élastique 71 est préférentiellement utilisé pour les roues 2 qui comprennent un pneu 6 ne nécessitant pas de chambre à air 71.

La jante 3 peut cependant comprendre plusieurs éléments d'étanchéité 7.

A titre d'exemple, et tel que cela est illustré sur la figure 3, la roue 2 peut comprendre à la fois un anneau élastique 72 et une chambre à air 71.

Le moyeu 4 qui permet la fixation de la roue 2 sur le véhicule est adapté au type de véhicule sur lequel la roue 2 est montée.

Pour permettre l'assemblage de la roue 2, la jante 3 et les rayons 5 présentent des premiers moyens d'emboîtement radiaux 8, et le moyeu 4 et les rayons 5 présentent des deuxièmes moyens d'emboîtement radiaux 9.

Tel que cela est visible sur la figure 2, les premiers moyens d'emboitement radiaux 8 comprennent :
- des organes mâles 81 portés par l'un de la jante 3 et des rayons 5, et
- des organes femelles 82 portés par l'autre des rayons 5 et de la jante 3.

De même, les deuxièmes moyens d'emboitement radiaux 9 comprennent :
- des éléments mâles 91 portés par l'un du moyeu 4 et des rayons 5, et
- des éléments femelles 92 portés par l'autre des rayons 5 et du moyeu 4.

Plus précisément, chaque rayon 5 présente une première extrémité portant un organe mâle 81 et une deuxième extrémité portant un élément mâle 91.

Les organes femelles 82 et les éléments femelles 92 sont alors respectivement portés par la jante 3 et le moyeu 4.

Comme illustré sur la figure 2, chaque organe femelle 82 se présente sous la forme d'une pièce rapportée et solidarisée à la jante 3.

Ces pièces rapportées sont par exemple soudées, vissées ou collées sur un tronçon de liaison 311.

En variante non illustrée, les organes femelles 82 sont directement intégrés aux tronçons de liaison 311. En d'autres termes, les organes femelles 82 peuvent être venus de matière avec les tronçons de liaison 311.

Dans l'exemple illustré sur les figures 1 et 2, chaque roue 2 comprend trois rayons 5.

Comme illustré sur la figure 2, le moyeu 4 se présente alors sous la forme d'une étoile à trois branches, chaque branche formant alors un élément femelle 92.

Afin de favoriser la tenue mécanique de la roue 2, la jante 3 présente deux flancs 33, 34 de part et d'autre de la gorge 32 de réception, tel qu'illustré sur la figure 3.

Ainsi, chaque tronçon porte une partie des flancs 33, 34, et présente :
- au moins une forme concave 35 à l'une de son extrémité mâle 314 et de son extrémité femelle 313,
- au moins une forme convexe 36 à l'autre de son extrémité femelle 313 et de son extrémité mâle 314.

La forme concave 35 et la forme convexe 36 coopèrent l'une avec l'autre lorsque la jante 3 est assemblée.

Un tel assemblage favorise notamment la tenue mécanique de la roue 2 lors de son utilisation, et évite principalement sa déformation.

A titre d'exemple, la coopération entre les formes concaves 35 et les formes convexes 36 de chacun des tronçons 31 permet d'éviter :
- le saut de la roue 2, c'est-à-dire son ovalisation (déformation orthogonale à la direction de déplacement dans un plan parallèle à la direction de déplacement du véhicule), et
- le voilage de la roue 2, c'est-à-dire sa déformation latérale à une direction de déplacement du véhicule dans un plan parallèle au plan sur lequel est le véhicule).

Selon le mode de réalisation illustré sur la figure 2, les organes mâles 81 et les éléments mâles 91 se présentent sous la forme de fiches à section oblongue et les organes femelles 82 et les éléments femelles 92 se présentent sous la forme de cavités à section oblongue.

En variante non représentée, la section des premiers moyens d'emboîtement radiaux 8 et la section des deuxièmes moyens d'emboîtement radiaux 9 peuvent être circulaire, ovale, triangulaire ou de toute autre forme.

Par ailleurs, toujours selon le mode de réalisation illustré sur les figures 1 et 2, les rayons 5 s'étendent de manière sensiblement rectiligne.

En variante non illustrée, les rayons 5 peuvent être arqués, en forme de zigzag ou encore présenter plusieurs branches.

La roue 2 selon l'invention est réalisée selon le procédé de montage comprenant les étapes décrites ci-après.

Une première étape consiste au couplage par emboîtement des rayons 5 et du moyeu 4.

Pour cela, les éléments mâles 91 sont emboîtés dans les éléments femelles 92.

Une deuxième étape consiste couplage par emboîtement des rayons 5 et de la jante 3.

Les tronçons de liaison 311 sont alors assemblés avec les rayons 5.

Plus précisément, les organes mâles 81 coopèrent avec les organes femelles 82.

L'assemblage des tronçons intermédiaires 312 entre les tronçons de liaison 311 est réalisée simultanément à l'assemblage entre les tronçons de liaison 311 et les rayons 5.

Une troisième étape consiste en la mise de l'élément d'étanchéité 7 et du pneu 6 dans la gorge 32 de réception.

Dans le cas particulier illustré sur la figure 3, deux éléments d'étanchéité sont mis en place dans la gorge 32 de réception, à savoir un anneau élastique 72 et une chambre à air 71.

Enfin, une quatrième étape consiste en la mise sous pression du volume de gonflage V.

Cette mise sous pression est réalisée par l'injection d'air dans le volume de gonflage V, le cas échéant dans la chambre à air 71 (située dans le volume de gonflage V) qui vient au contact du pneu 6 et de la gorge 32 de réception (ou contre l'anneau élastique 72 comme dans le mode de réalisation illustré sur la figure 3).

## Revendications

1. Roue (2) comprenant une jante (3), un moyeu (4), au moins trois rayons (5) reliant la jante (3) et le moyeu (4), et un pneu (6), la jante (3) présentant une gorge (32) de réception du pneu (6), le pneu (6) définissant avec la gorge (32) de réception un volume de gonflage (V), la jante (3) étant constituée par au moins deux tronçons (31) en arc de cercle destinés à être solidarisés pour former ensemble la jante (3), la roue (2) comprenant également un élément d'étanchéité (7) monté dans le volume de gonflage (V) pour permettre sa mise sous pression,
**caractérisé en ce que** la jante (3) et les rayons (5) présentent des premiers moyens d'emboîtement radiaux (8), **en ce que** le moyeu (4) et les rayons (5) présentent des deuxièmes moyens d'emboîtement radiaux (9), le maintien en position emboîtée de la jante (3) avec les rayons (5) et du moyeu (4) avec les rayons (5) étant assuré par la mise sous pression du volume de gonflage (V).

2. Roue (2) selon la revendication 1, **caractérisée en ce que** l'élément d'étanchéité (7) se présente sous la forme d'une chambre à air (71).

3. Roue (2) selon la revendication 1, **caractérisée en ce que** l'élément d'étanchéité (7) se présente sous la forme d'un anneau élastique (72), tendant à maintenir les tronçons (31) de la jante (3) assemblés avant mise sous pression du volume de gonflage (V).

4. Roue (2) selon l'une quelconque des revendications précédentes , **caractérisée en ce que** les premiers moyens d'emboitement radiaux (8) comprennent :
- des organes mâles (81) portés par l'un de la jante (3) et des rayons (5), et
- des organes femelles (82) portés par l'autre des rayons (5) et de la jante (3).

5. Roue (2) selon la revendication précédente, **caractérisée en ce que** chaque organe femelle (82) se présente sous la forme d'une pièce rapportée et solidarisée à la jante (3).

6. Roue (2) selon l'une quelconque des revendications précédentes, **caractérisée en ce que** les deuxièmes moyens d'emboitement radiaux (9) comprennent :
- des éléments mâles (91) portés par l'un du moyeu (4) et des rayons (5), et
- des éléments femelles (92) portés par l'autre des rayons (5) et du moyeu (4).

7. Roue (2) selon l'une quelconque des revendications précédentes, **caractérisée en ce que** chaque tronçon (31) de la jante (3) présente une extrémité mâle (314) et une extrémité femelle (313), l'extrémité mâle (314) d'un tronçon (31) coopérant avec l'extrémité femelle (313) d'un tronçon (31) abouté.

8. Roue (2) selon la revendication précédente, **caractérisée en ce que** la jante (3) présente deux flancs (33, 34) de part et d'autre de la gorge (32) de réception, et **en ce que** chaque tronçon (31) présente :
- au moins une forme concave (35) à l'une de son extrémité mâle (314) et de son extrémité femelle (313),
- au moins une forme convexe (36) à l'autre de son extrémité femelle (313) et de son extrémité mâle (314),
la forme concave (35) et la forme convexe (36) coopérant l'une avec l'autre lorsque la jante (3) est assemblée.

9. Roue (2) selon la revendication 7 ou la revendication 8, **caractérisée en ce que** l'extrémité mâle (314) de chaque tronçon (31) de la jante (3) présente au moins deux ergots (315), et l'extrémité femelle (313) de chaque tronçon (31) présente au moins deux logements (316) de réception dans lesquels sont reçus les ergots (315).

10. Roue (2) selon l'une quelconque des revendications précédentes, **caractérisée en ce que** la jante (3) comprend trois tronçons de liaison (311) avec les rayons (5) et trois tronçons intermédiaires (312), les tronçons intermédiaires (312) étant chacun situés entre deux tronçons de liaison (311).

11. Procédé de montage d'une roue (2) selon la revendication 1, **caractérisé en ce qu'**il comprend les étapes de :
- couplage par emboîtement des rayons (5) et du moyeu (4) ;
- couplage par emboîtement des rayons (5) et de la jante (3) ;
puis,
- mise de l'élément d'étanchéité (7) et du pneu (6) dans la gorge (32) de réception ;
- mise sous pression du volume de gonflage (V).

## Patentansprüche

1. Rad (2), umfassend eine Felge (3), eine Nabe (4), mindestens drei Speichen (5), welche die Felge (3) und die Nabe (4) verbinden, und einen Reifen (6), wobei die Felge (3) eine Aufnahmenut (32) für den Reifen (6) aufweist, der Reifen (6) mit der Aufnahmenut (32) ein Aufpumpvolumen (V) definiert, wobei die Felge (3) durch mindestens zwei kreisbogenförmige Teilstücke (31) gebildet wird, die dazu bestimmt sind, fest miteinander verbunden zu werden, um gemeinsam die Felge (3) zu formen, wobei das Rad (2) auch ein Dichtelement (7) umfasst, das im Aufpumpvolumen (V) montiert ist, um dessen Unter-Druck-Setzen zu erlauben, **dadurch gekennzeichnet, dass** die Felge (3) und die Speichen (5) erste radiale Einpassungsmittel (8) aufweisen, dadurch, dass die Nabe (4) und die Speichen (5) zweite radiale Einpassungsmittel (9) aufweisen, wobei das Festhalten der Felge (3) mit den Speichen (5) und der Nabe (4) mit den Speichen (5) in der eingepassten Position durch das Unter-Druck-Setzen des Aufpumpvolumens (V) gewährleistet wird.

2. Rad (2) nach Anspruch 1, **dadurch gekennzeichnet, dass** sich das Dichtelement (7) in Form eines Reifenschlauches (71) darstellt.

3. Rad (2) nach Anspruch 1, **dadurch gekennzeichnet, dass** sich das Dichtelement (7) in Form eines elastischen Ringes (72) darstellt, der dazu tendiert, die vor dem Unter-Druck-Setzen des Aufpumpvolumens (V) zusammengesetzten Teilstücke (31) der Felge (3) festzuhalten.

4. Rad (2) nach einem der vorstehenden Ansprüche, **dadurch gekennzeichnet, dass** die ersten radialen Einpassungsmittel (8) umfassen:
- Steckorgane (81), die von einem der Felge (3) und der Speichen (5) getragen werden, und
- Aufnahmeorgane (82), die von dem anderen der Speichen (5) und der Felge (3) getragen werden.

5. Rad (2) nach dem vorstehenden Anspruch, **dadurch gekennzeichnet, dass** sich jedes Aufnahmeorgan (82) in Form eines beigebrachten, und fest mit der Felge (3) verbundenen Teils darstellt.

6. Rad (2) nach einem der vorstehenden Ansprüche, **dadurch gekennzeichnet, dass** die zweiten radialen Einpassungsmittel (9) umfassen:
- Steckelemente (91), die von einem der Nabe (4) und der Speichen (5) getragen werden, und
- Aufnahmeelemente (92), die von dem anderen der Speichen (5) und der Nabe (4) getragen werden.

7. Rad (2) nach einem der vorstehenden Ansprüche, **dadurch gekennzeichnet, dass** jedes Teilstück (31) der Felge (3) ein Steckende (314) und ein Aufnahmeende (313) aufweist, wobei das Steckende (314) eines Teilstücks (31) mit dem Aufnahmeende (313) eines zusammengefügten Teilstücks (31) zusammenwirkt.

8. Rad (2) nach dem vorstehenden Anspruch, **dadurch gekennzeichnet, dass** die Felge (3) zwei Flanken (33, 34) beiderseits der Aufnahmenut (32) aufweist, und dadurch, dass jedes Teilstück (31) aufweist:
- mindestens eine konkave Form (35) an dem einen von seinem Steckende (314) und von seinem Aufnahmeende (313),
- mindestens eine konvexe Form (36) an dem anderen von seinem Steckende (314) und von seinem Aufnahmeende (313), wobei die konkave Form (35) und die konvexe Form (36) miteinander zusammenwirken, wenn die Felge (3) zusammengesetzt ist.

9. Rad (2) nach Anspruch 7 oder Anspruch 8, **dadurch gekennzeichnet, dass** das Steckende (314) eines jeden Teilstücks (31) der Felge (3) mindestens zwei Zapfen (315) aufweist, und das Aufnahmeende (313) eines jeden Teilstücks (31) mindestens zwei Empfangsaufnahmen (316) aufweist, in denen die Zapfen (315) empfangen werden.

10. Rad (2) nach einem der vorstehenden Ansprüche, **dadurch gekennzeichnet, dass** die Felge (3) drei Verbindungsteilstücke (311) mit den Speichen (5) und drei Zwischenteilstücke (312) umfasst, wobei sich die Zwischenteilstücke (312) jeweils zwischen zwei Verbindungsteilstücken (311) befinden.

11. Verfahren zum Montieren eines Rades (2) nach Anspruch 1, **dadurch gekennzeichnet, dass** es die Schritte umfasst zum:
- Koppeln durch Einpassen der Speichen (5) und der Nabe (4) ;
- Koppeln durch Einpassen der Speichen (5) und der Felge (3); danach,
- Einsetzen des Dichtelements (7) und des Reifens (6) in die Aufnahmenut (32);
- Unter-Druck-Setzen des Aufpumpvolumens (V).

## Claims

1. A wheel (2) comprising a rim (3), a hub (4), at least three spokes (5) connecting the rim (3) and the hub (4), and a tyre (6), the rim (3) having a groove (32) for receiving the tyre (6), the tyre (6) defining with the receiving groove (32) an inflation volume (V), the rim (3) consisting of at least two circle-arc shaped sections (31) intended to be secured to form together the rim (3), the wheel (2) also comprising a sealing element (7) mounted in the inflation volume (V) to enable pressurisation thereof, **characterised in that** the rim (3) and the spokes (5) have first radial interlocking means (8), **in that** the hub (4) and the spokes (5) have second radial interlocking means (9), holding of the rim (3) in an interlocked position with the spokes (5) and of the hub (4) with the spokes (5) being ensured by pressurisation of the inflation volume (V) .

2. The wheel (2) according to claim 1, **characterised in that** the sealing element (7) is in the form of an inner tube (71).

3. The wheel (2) according to claim 1, **characterised in that** the sealing element (7) is in the form of an elastic ring (72), tending to keep the sections (31) of the rim (3) assembled before pressurisation of the inflation volume (V).

4. The wheel (2) according to any one of the preceding claims, **characterised in that** the first radial interlocking means (8) comprise:
- male members (81) carried by one amongst the rim (3) and the spokes (5), and
- female members (82) carried by the other one amongst the spokes (5) and the rim (3).

5. The wheel (2) according to the preceding claim, **characterised in that** each female member (82) is in the form of a part attached and secured to the rim (3).

6. The wheel (2) according to any one of the preceding claims, **characterised in that** the second radial interlocking means (9) comprise:
- male elements (91) carried by one amongst the hub (4) and the spokes (5), and
- female elements (92) carried by the other one amongst the spokes (5) and the hub (4).

7. The wheel (2) according to any one of the preceding claims, **characterised in that** each section (31) of the rim (3) has a male end (314) and a female end (313), the male end (314) of a section (31) cooperating with the female end (313) of a jointed section (31).

8. The wheel (2) according to the preceding claim, **characterised in that** the rim (3) has two sidewalls (33, 34) on either side of the receiving groove (32), and **in that** each section (31) has:
- at least one concave shape (35) at one amongst its male end (314) and its female end (313),
- at least one convex shape (36) at the other one amongst its female end (313) and its male end (314),
the concave shape (35) and the convex shape (36) cooperating with each other when the rim (3) is assembled.

9. The wheel (2) according to claim 7 or claim 8, **characterised in that** the male end (314) of each section (31) of the rim (3) has at least two lugs (315), and the female end (313) of each section (31) has at least two receiving compartments (316) in which the lugs (315) are received.

10. The wheel (2) according to any one of the preceding claims, **characterised in that** the rim (3) comprises three sections (311) for connection with the spokes (5) and three intermediate sections (312), each of the intermediate sections (312) being located between two connecting sections (311).

11. A method for mounting a wheel (2) according to claim 1, **characterised in that** it comprises the steps of:
- coupling the spokes (5) and the hub (4) by fitting;
- coupling the spokes (5) and the rim (3) by fitting; then,
- placing the sealing element (7) and the tyre (6) in the receiving groove (32);
- pressurising the inflation volume (V).
